# EUROPEAN PATENT SPECIFICATION

(11) **EP 4 089 508 B1**
(45) Date of publication and mention of the grant of the patent: **19.08.2026**
(21) Application number: 22171621.0
(22) Date of filing: 04.05.2022
(51) Int. Cl.: G06F 3/01

(54) **INPUT DEVICE**
EINGABEVORRICHTUNG
DISPOSITIF D'ENTRÉE

(30) Priority: 11.05.2021 JP 2021080362
(43) Date of publication of application: 16.11.2022
(73) Proprietor: Alps Alpine Co., Ltd., Ota-ku, Tokyo 145-8501 (JP)
(72) Inventor: Shirashima, Hitoshi, Iwaki-City Fukushima (JP)
(74) Representative: Schmitt-Nilson Schraud Waibel Wohlfrom Patentanwälte Partnerschaft mbB

(56) References cited:
- EP-A1- 3 444 948
- US-A1- 2015 109 215
- US-A1- 2016 239 089

## Description

The present invention relates to an input device that can give a manipulation feeling with large energy to a finger when a manipulation unit having a relatively large mass is manipulated with the finger.

An invention related to an image forming apparatus in which a touch panel has a vibrating means is described in JP 2006-150865 A. This image forming apparatus has a vibration waveform setting means by which different vibration waveforms are set. The image forming apparatus also has a sound output time period setting means, a sound frequency setting means, a vibration start time setting means, and the like. These setting means are set for each key displayed on the touch panel or for all keys. When the touch panel is pressed with a finger or the like and the pressing is detected by a key selection detection means, the touch panel vibrates according to the settings of the setting means.

An invention related to a manipulation device, targeted at an automobile, that has a touch pad is described in Japanese Unexamined Patent Application Publication (Translation of PCT Application) No. 2019-516194. With this manipulation device, when the manipulation surface of the touch pad is manipulated with a finger, an actuator is driven so that a feeling is caused on the manipulation surface. Part of operation on the manipulation surface of the touch pad, which is mechanically supported, is significantly accelerated and then significantly decelerated according to the selection of the intensity, start frequency, frequency profile, and other parameter of a pulse-width modulation (PWM) signal given to the actuator.

Technologies for giving a vibration-caused feeling to a finger that has touched a manipulation surface are described in JP 2006-150865 A and Japanese Unexamined Patent Application Publication (Translation of PCT Application) No. 2019-516194. In these patent documents, however, a technical means for effectively transmitting vibration energy to a manipulation unit is not described. A large manipulation unit such as a vehicle-mounted manipulation unit, for example, has a large mass and thereby undergoes a large inertial force. Therefore, it is difficult to have the manipulation unit generate large acceleration in a short time from the start of vibration. This makes it not possible to give a clean and sharp feeling to the finger with which the manipulation unit is manipulated.

US 2016/239089 A1 discloses a drive apparatus, an electronic device, a drive control program, and a drive signal generating method that drive a vibration-generating device, for presenting a favorable sense of touch when the frequency of the vibration-generating device varies depending on the acceleration amplitude.

EP 3 444 948 A1 discloses a response force generation device capable of driving a member to be operated with a large acceleration by a response force generation mechanism including a magnetic drive unit.

The present invention addresses the above conventional problem with the object of providing an input device that can cause even a large manipulation unit with a relatively large mass to have large acceleration immediately after the start of vibration so that a susceptible manipulation feeling is given to the finger of the manipulator.

The invention relates to an input device according to the appended claims. Embodiments are disclosed in the dependent claims.

With the input device according to an embodiment of the present invention, an acceleration sensor is provided in the manipulation unit, and in the control unit, the cycle of the driving signal is set with reference to a detection output from the acceleration sensor.

Alternatively, with the input device according to an embodiment of the present invention, in the control unit, the cycle of the driving signal may be set according to the vibration characteristics of the manipulation unit.

With the input device according to an embodiment of the present invention, a temperature sensor is preferably provided in the manipulation unit, and in the control unit, the cycle of the driving signal is preferably corrected with reference to a detection output from the temperature sensor.

The input device of the present invention increases the efficiency of transmitting vibration energy from a vibration generation device to a manipulation unit. Therefore, the input device can give large acceleration even to a large manipulation unit with a relatively large mass immediately after the start of vibration. As a result, it is possible to give a clear manipulation feeling to the finger with which a manipulation unit is performed.
Fig. 1 is a perspective view illustrating the outside shape of an input device according to an embodiment of the present invention;
Fig. 2 is a sectional view of the input device in Fig. 1 as taken along line II-II;
Fig. 3 is a circuit block diagram for the input device according to an embodiment;
Fig. 4 is a schematic diagram illustrating an example of driving control in the input device according to an embodiment;
Fig. 5A is a schematic diagram illustrating another example of driving control in the input device according to an embodiment;
Fig. 5B is a schematic diagram illustrating operation control in the input device in a comparative example;
Fig. 5C is another schematic diagram illustrating operation control in the input device in a comparative example; and
Fig. 6 illustrates of a modeled vibration system in the input device.

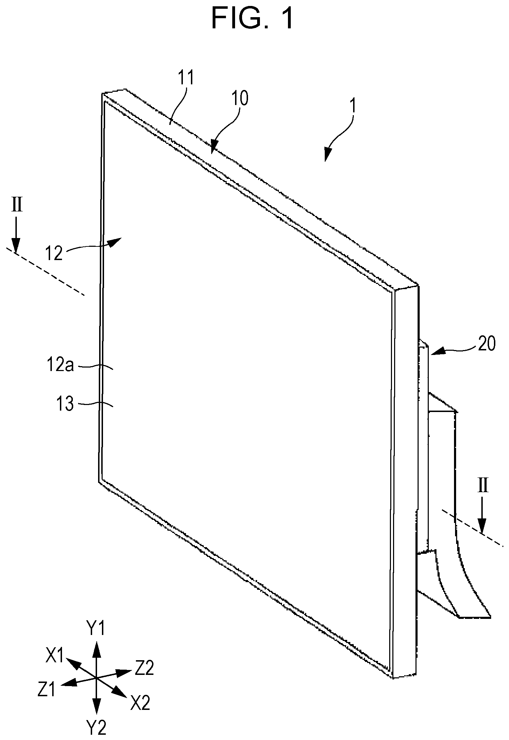

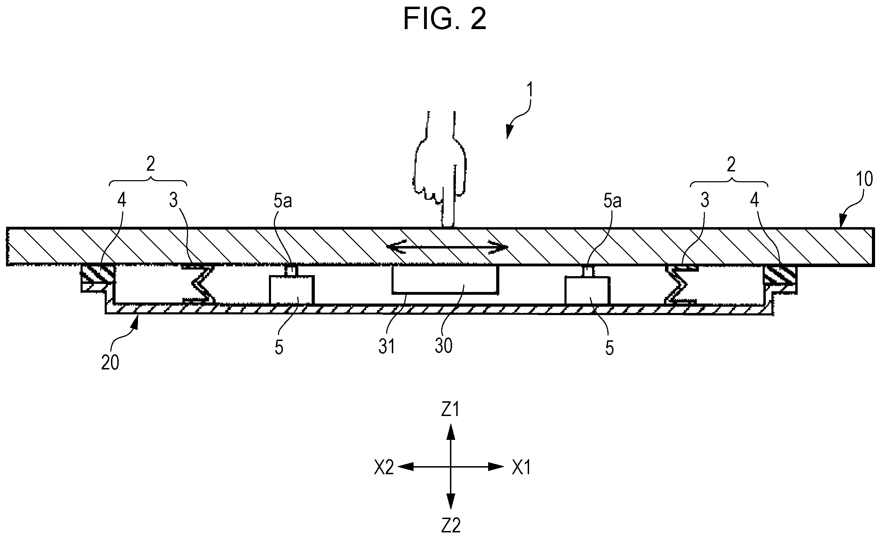

An input device 1 illustrated in Figs. 1 and 2 is preferably a vehicle-mounted input device. In these drawings, the Z1-Z2 direction is the front-back direction. The Z1 direction is the forward direction to the interior of the vehicle, that is, the backward travel direction of the vehicle. The Z2 direction is the backward direction, that is, the forward travel direction of the vehicle. The Y1-Y2 direction is the up-down direction. The X1-X2 direction is the left-right direction. The X1-X2 direction is the direction in which the manipulation unit 10 vibrates and is also the direction in which acceleration that generates a manipulation feeling is exerted.

The input device 1 has a manipulation unit 10 and a support device 20 that supports the manipulation unit 10. The support device 20 is fixed to a support base provided on the instrument panel or dashboard, which is positioned on the Z2 side in the interior of an automobile. The manipulation unit 10 and support device 20 are linked together by an elastic support mechanism 2, as illustrated in Fig. 2. The manipulation unit 10 is elastically supported by the elastic support mechanism 2 so that the manipulation unit 10 can move at least in the left-right direction (X1-X2 direction) and front-back direction (Z1-Z2 direction) with respect to the support device 20.

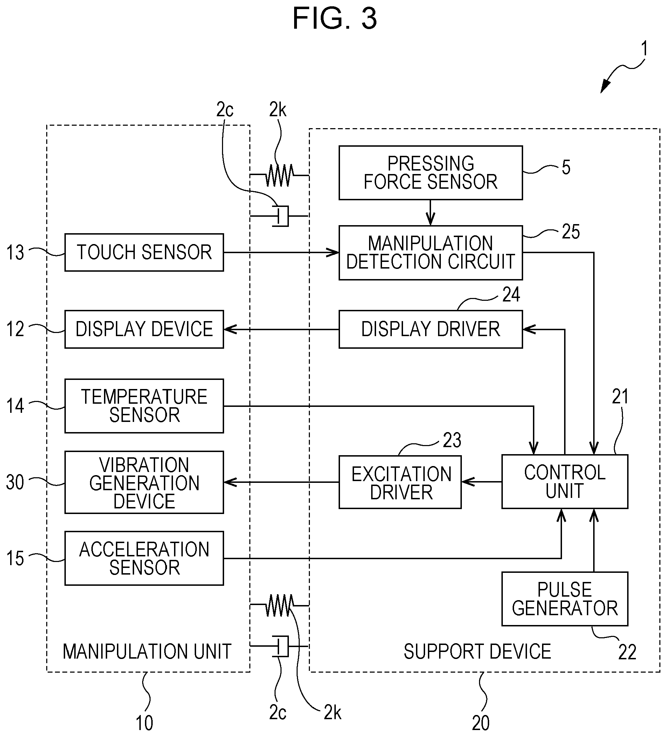

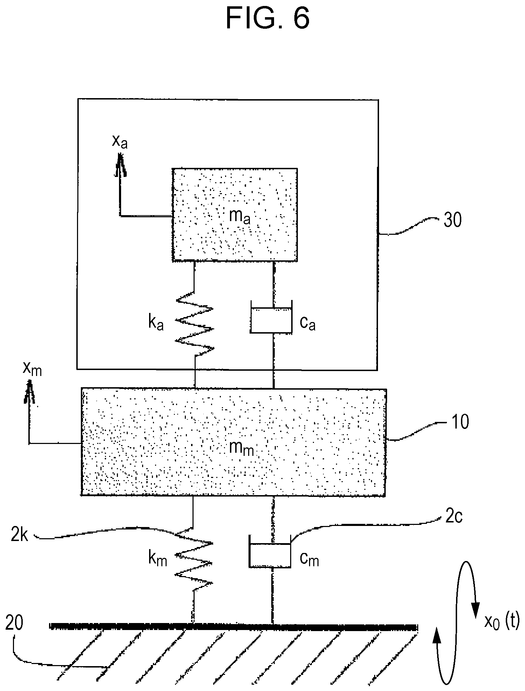

The elastic support mechanism 2 illustrated in Fig. 2 is composed of a leaf spring 3 and a rubber member 4. When the leaf spring 3 is deformed by being warped, the manipulation unit 10 can move in the left-right direction (X1-X2 direction) and front-back direction (Z1-Z2 direction) with respect to the support device 20. The rubber member 4 is disposed so as to enclose the space between the support device 20 and the manipulation unit 10. In the circuit block diagram in Fig. 3, an elastic portion 2k, which forms the elastic coefficient of the elastic support mechanism 2, and a viscous resistance portion 2c, which forms a viscous resistance coefficient, are included. The elastic support mechanism 2 in Fig. 2 is just an example. The elastic support mechanism 2 may be composed of only a coil spring, may be a combination of a coil spring and a rubber member, or may be a combination of a coil spring and a leaf spring, for example. In a modeled vibration system in Fig. 6, the mass of the manipulation unit 10 is indicated by mₘ, the elastic coefficient of the elastic portion 2k is indicated by kₘ, and the viscous resistance coefficient of the viscous resistance portion 2c is indicate by cₘ.

The manipulation unit 10 has a unit case 11 formed from a synthetic resin material or light metal material. A display device 12 is accommodated in the unit case 11. The display device 12 is a color liquid crystal display device. Its display screen 12a appears on the front surface of the unit case 11, the front surface facing in the Z1 direction. The color liquid crystal display device has a transparent liquid crystal display cell. A backlight device facing the back (Z2 side) of the liquid crystal display cell is accommodated in the unit case 11. The backlight device has a light source composed of, for example, light-emitting diodes (LEDs), and also has a light guide member that directs illumination light emitted from the light source to the liquid crystal display cell. The display device 12 may be an electroluminescence display device.

The manipulation unit 10 has a transparent cover panel that covers the front of the display screen 12a, the front being in the Z1 direction. A touch sensor 13, which is a first input detection unit, is provided on the inner surface of the cover panel, the inner surface facing in the Z2 direction. The touch sensor 13 has a transparent substrate attached to the cover panel, and also has a plurality of transparent electrodes formed on a surface of the transparent substrate. When a finger comes into contact with the display screen 12a, a detection output can be obtained according to a change in mutual capacitance detected between transparent electrodes placed close to each other or a change in self-capacitance detected at an individual transparent electrode, the detection output indicating the coordinate positions, in an X-Y plane, of the location at which the finger has touched the display screen 12a.

The support device 20 has a pressing force sensor 5, which is a second input detection unit, as illustrated in Fig. 2. The pressing force sensor 5 obtains a detection output when the manipulation unit 10 is pressed backward (in the Z2 direction) with a finger or the like. The pressing force sensor 5, which is a mechanical pressing switch, has an actuator 5a, oriented to the rear surface of the manipulation unit 10, that receives a pressing force. An example usable as the pressing force sensor 5 is a pressure sensor having an elastic beam that generates a warp when the manipulation unit 10 is pressed backward and also having a warp gage that detects the warp. Another example is a piezoelectric element that outputs a voltage that changes according to the pressing force.

A vibration generation device 30 is provided on the rear surface, facing in the backward direction (Z2 direction), of the manipulation unit 10, as illustrated in Fig. 2. The vibration generation device 30 has a driving case 31 fixed to the unit case 11 of the manipulation unit 10. In the driving case 31, a vibrator is provided that is supported by an elastic support mechanism 2 such as a leaf spring or coil spring so as to be movable in the X1-X2 direction. The vibrator has a magnetic core and a coil wound on the magnetic core. A permanent magnet is fixed in the driving case 31 so as to face the magnetic core. In the modeled vibration system in Fig. 6, the mass of the vibrator is indicated by mₐ, the elastic coefficient of the elastic support mechanism 2 is indicated by kₐ, and the coefficient of viscosity is indicated by cₐ.

A driving signal, which is an alternate current, is supplied to the coil wound on the vibrator in the vibration generation device 30. When the polarity of magnetization generated around the magnetic core changes, the vibrator is reciprocated in the X1-X2 direction due to a magnetic attractive force and magnetic repulsive force generated between the polarity of the permanent magnet and the polarity that changes in the magnetic core. When the vibrator in the vibration generation device 30 moves in the X1 direction and X2 direction, an excitation force obtained from the mass of the vibrator and the acceleration at the time of the movement is exerted on the manipulation unit 10, by which acceleration is generated in the X1 direction and X2 direction for the manipulation unit 10 having a predetermined mass.

The vibration generation device 30 may have another structure in which a rotational weight having an uneven mass distribution and a motor that rotates the rotational weight. With this type of vibration generation device, when the rotational weight is rotated by the motor, an excitation force component in the X1 direction and an excitation force component in the X2 direction can be exerted on the manipulation unit 10.

The manipulation unit 10 has an acceleration sensor 15 that detects acceleration in the X1-X2 direction, as illustrated in the circuit block diagram in Fig. 3. The manipulation unit 10 also has a temperature sensor 14. Temperature around the manipulation unit 10 is detected by the temperature sensor 14. Cycles of X1-direction and Y2-direction vibration generated in the vibration generation device 30 and the like are corrected according to the detected temperature. A color liquid crystal display device used as the display device 12 is generally equipped with a temperature sensor that detects driving environment temperature to prevent the display cell from becoming hot by correcting the brightness of a displayed image or the like according to the detected temperature. The temperature sensor included in the display device 12 can double as the temperature sensor 14 illustrated in Fig. 2.

The support device 20 in the input device 1 has a circuit board on which integrated circuits (ICs) and other electronic devices that constitute an electronic circuit are mounted. A control unit 21 is provided in the electronic circuit as illustrated in the circuit block diagram in Fig. 3. The control unit 21 is composed of a central processing unit (CPU) and a memory. A pulse generator 22 is also provided in the electronic circuit. The pulse generator 22 is a pulse-width modulation (PWM) generator. The pulse generator 22 creates a square wave (pulse voltage) and gives it to the control unit 21. The square wave is modulated in the control unit 21, after which the modulated square wave is given to an excitation driver 23. In the excitation driver 23, the modulated square wave is then converted to an analog driving signal approximating a change in a trigonometric function. This driving signal is given from the excitation driver 23 to the coil in the vibration generation device 30. The electronic circuit has a display driver 24 and a manipulation detection circuit 25. An image creation signal is given from the control unit 21 to the display driver 24. An image signal is given from the display driver 24 to the display device 12. A detection signal from the touch sensor 13, which is the first input detection unit, is given to the manipulation detection circuit 25. A detection signal from the pressing force sensor 5, which is the second input detection unit, is also given to the manipulation detection circuit 25. A manipulation signal is given from the manipulation detection circuit 25 to the control unit 21, according to the detection outputs from the touch sensor 13 and pressing force sensor 5. A detection signal from the acceleration sensor 15 mounted in the manipulation unit 10 and a detection signal from the temperature sensor 14 are also given to the control unit 21.

Next, the operation of the input device 1 will be described.

In the control unit 21, image creation signals forming a predetermined image are given to the display driver 24, after which these image signals are given from the display driver 24 to the display device 12. In the manipulation unit 10, the image is displayed on the display screen 12a facing forward in the Z1 direction. This displayed image includes a plurality of menus and images indicating manipulation commanding portions such as a plurality of manipulation keys.

When the manipulator brings a finger closer to or in contact with the display screen 12a while confirming the displayed image as illustrated in Fig. 2, the position of the finger is detected by the touch sensor 13, which is the first input detection unit, after which a manipulation signal is given from the manipulation detection circuit 25 to the control unit 21. In the control unit 21, the portion, on the displayed image, indicated with the finger is recognized. When any one of the manipulation commanding portions is selected with a finger and the manipulation unit 10 is then pressed with the finger in the Z2 direction with the portion selected with the finger, the elastic support mechanism 2 deforms. This causes the manipulation unit 10 to move backward and also causes the pressing force sensor 5, which is the second input detection unit, to operate. A manipulation signal is given to the control unit 21 according to a detection signal from the pressing force sensor 5. Upon receipt of the manipulation signal, the control unit 21 recognizes that a certain manipulation has been performed according to the image of the selected manipulation commanding portion. At the same time, a square wave is given from the control unit 21 to the excitation driver 23 and a driving signal (driving voltage) is given from the excitation driver 23 to the coil in the vibration generation device 30. Then, the vibrator in the vibration generation device 30 vibrates in the X1-X2 direction. An excitation force due to the vibration of the vibration generation device 30 is given to the manipulation unit 10, causing the manipulation unit 10 to generate acceleration in the X1-X2 direction. This acceleration is given to the finger of the manipulator as a manipulation feeling.

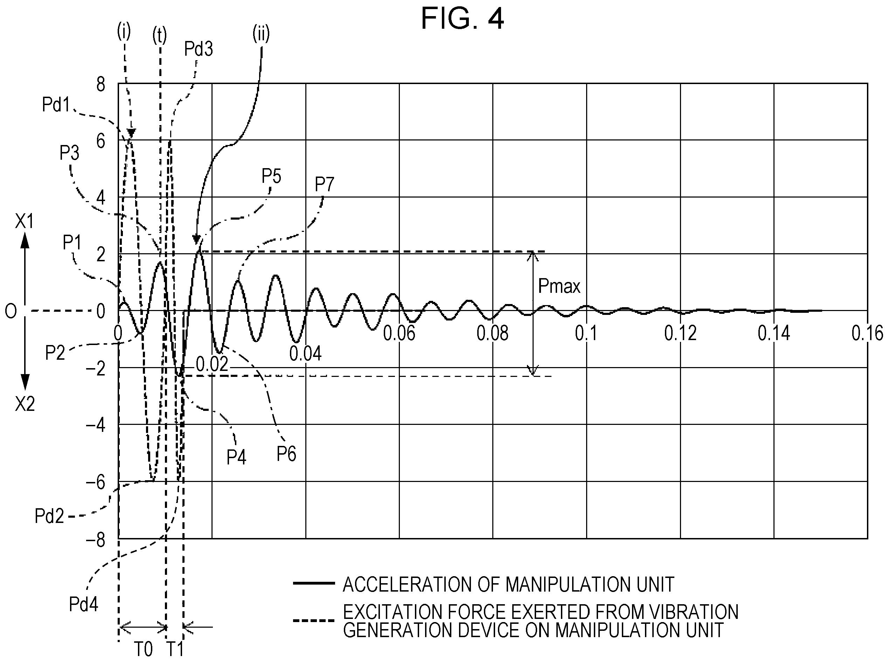

The schematic diagram in Fig. 4 illustrates an example of control of an excitation force given to the manipulation unit 10. The dashed line in Fig. 4 indicates changes in an excitation force (i) exerted from the vibration generation device 30 on the manipulation unit 10, with time on the horizontal axis and the intensity of the excitation force (i) on the vertical axis. The excitation force (i) is zero on the center line O. The upper in the drawing the dashed-line graph is along the vertical axis, the greater the excitation force (i) exerted in the X1 direction is. The lower in the drawing the dashed-line graph is, the greater the excitation force (i) exerted in the X2 direction is. The solid line in Fig. 4 indicates changes in the acceleration (ii) of the inertial force of the manipulation unit 10 that is vibrating in response to a vibration force from the vibration generation device 30. In Fig. 4, the acceleration (ii) is zero on the center line O. The upper in the drawing the solid-line graph is along the vertical axis, the greater the acceleration (ii) exerted in the X1 direction is. The lower in the drawing the solid-line graph is, the greater the acceleration (ii) exerted in the X2 direction is. In the example of control in Fig. 4, four peak values Pd1, Pd2, Pd3, and Pd4 of the excitation force (i) generated in the vibration generation device 30 appear, after which the vibration generation device 30 stops. That is, in the vibration generation device 30, the vibrator is driven by two cycles. When the manipulation unit 10 receives an excitation force from the vibration generation device 30 and vibrates, the peak values P1, P2, P3, P4, P5, P6, P7, and so on of the acceleration (ii) exerted on the manipulation unit 10 appear in that order.

The input device 1 has a free vibration system in which the manipulation unit 10 having the predetermined mass is supported to the support device 20 with the elastic portion 2k and viscous resistance portion 2c intervening between the manipulation unit 10 and the support device 20 so that the manipulation unit 10 can vibrate in the X1-X2 direction, as illustrated in Figs. 2 and 6. In Fig. 6, for the sake of explaining the vibration principle, the up-down direction (xₐ direction and xₘ direction in Fig. 6) in the drawing is taken as the vibration direction (X direction) of the manipulation unit 10 and vibrator vibrate. In this free vibration system, there is a shift of π between the phase of the displacement of the manipulation unit 10 in the X1-X2 direction and the phase of the change of the acceleration (ii) of the manipulation unit 10. Therefore, the direction of the displacement of the manipulation unit 10 during vibration (the direction in which the amplitude is increased) is opposite to the direction in which the acceleration (ii) illustrated in Fig. 4 is exerted. In the vibration generation device 30 as well, the direction of the displacement of the vibrator in the X1-X2 direction and the direction of the excitation force generated by the vibrator, the direction being the same as the direction of the acceleration, are also opposite to each other.

When the excitation force (i) generated in the vibration generation device 30 is exerted on the manipulation unit 10, the manipulation unit 10 starts to vibrate, and after the vibration generation device 30 stops, the manipulation unit 10 continues to vibrate due to inertia, as illustrated in Fig. 4. In Fig. 4, the acceleration (ii) of the manipulation unit 10 that has started to vibrate takes a third peak value P3 at time (t). Since the manipulation unit 10 that received a force from the vibration generation device 30 and has started to vibrate has a large mass and is largely affected by the elastic coefficient of an elastic support mechanism 2 and the coefficient of viscosity, a period from the start of the manipulation unit 10 to a time around time (t) is a transient vibration period. A steady vibration period starts from the time around time (t) or after the elapse of a certain time from time (t). In the steady vibration period, the cycle of vibration is constant and the amplitude is gradually reduced.

The square wave obtained from the pulse generator 22 is modulated in the control unit 21, and the modulated square wave is given to the excitation driver 23. The modulated square wave undergoes analog conversion in the excitation driver 23, and the resulting driving voltage is given to the vibration generation device 30. A shift between the phase of the driving signal and the phase of the excitation force generated in the vibration generation device 30 has been stored in the memory in the control unit 21. The control unit 21 performs control in which the phase of the driving voltage is determined with the shift taken into consideration. Thus, an arbitrary phase can be set for the excitation force (i) exerted from the vibration generation device 30 on the manipulation unit 10.

The characteristic frequency of the vibrator, the frequency being determined by the mass (mₐ) of the vibrator in the vibration generation device 30 and the elastic coefficient (kₐ) of the elastic support mechanism 2, and the characteristic frequency of the manipulation unit 10, the frequency being determined by the mass (mₘ) of the manipulation unit 10 and the elastic coefficient (kₘ) of the elastic portion 2k, have been set so that these frequencies approximate or preferably match each other. The cycle of the driving voltage given to the coil in the vibration generation device 30 is set so as to match either of the characteristic frequency of the vibration generation device 30 and the characteristic frequency of the manipulation unit 10 or to take an intermediate value between the characteristic frequency of the vibration generation device 30 and the characteristic frequency of the manipulation unit 10. When the cycle of the driving voltage approximates or preferably matches the characteristic frequency of the vibrator in the vibration generation device 30, the absolute value of the excitation force generated by the vibration of the vibrator can be increased. When the cycle of the driving voltage approximates or preferably matches the characteristic frequency of the manipulation unit 10, the response of vibration of the manipulation unit 10 that received an excitation force from the vibration generation device 30 is made better.

A mechanical model in which the manipulation unit 10 is elastically supported to the support device 20 and the vibrator is elastically supported in the vibration generation device 30 fixed to the manipulation unit 10 has a multi-stage vibration system in which two free vibration systems are linked, as illustrated in Fig. 6. Therefore, the phase of the excitation force (i), indicated by the dashed line in Fig. 4, which is exerted from the vibration generation device 30 on the manipulation unit 10, is delayed with respect to the vibration cycle of the vibrator in the vibration generation device 30. As a result, a shift is likely to occur between the phase of the excitation force (i) exerted on the manipulation unit 10 due to vibration generated in the vibration generation device 30 and the phase of the acceleration (ii) of the manipulation unit 10 that has started to vibrate, as illustrated in Fig. 4. In Fig. 4, the phase of the excitation force (i) indicated by the dashed line is behind the phase of the acceleration (ii) of the manipulation unit 10 that has already started to vibrate. In view of this, after the excitation force (i), which changes with a cycle T0, has proceeded by about 1 cycle, about 1.5 cycles, or about 2 cycles, the frequency of the driving voltage is changed so that the excitation force (i) changes with a cycle T1 shorter than the cycle T0, as illustrated in Fig. 4. In the example of control in Fig. 4, after the excitation force (i) having the cycle T0 has proceeded by one cycle, the cycle T0 changes to the cycle T1.

By performing modulation so that the cycle T0 of the change of the excitation force (i) exerted on the manipulation unit 10 is shortened to the cycle T1, a temporary match is made between a direction in which the acceleration (ii) of the manipulation unit 10 is exerted in the X2 direction and a direction in which the excitation force (i) is exerted on the manipulation unit 10 in the X2 direction, at the time at which the excitation force (i) takes the peak value Pd4. As the most preferable embodiment, in the example of control in Fig. 4, a match is made between the time at which the acceleration (ii) of the manipulation unit 10 takes the peak value P4 and the time at which the excitation force (i) exerted on the manipulation unit 10 takes the peak value Pd4. It is possible to make a match between a direction in which the acceleration (ii) of the manipulation unit 10 is exerted in the X2 direction and a direction in which the excitation force (i) is exerted on the manipulation unit 10 in the X2 direction, without having to make a complete match between the time at which the peak value P4 is taken and the time at which the peak value Pd4 is taken.

In the free vibration system, the phase of vibration is shifted by π from the phase of acceleration. Therefore, when the acceleration (ii) takes the peak value P4 in the X2 direction, the manipulation unit 10 is displaced in the X1 direction to the position at which the amplitude is maximized. When the excitation force (i) exerted from the vibration generation device 30 on the manipulation unit 10 takes the peak value Pd4 in the X2 direction, the X2-direction acceleration of the vibrator is also maximized. At that time, the vibrator in the vibration generation device 30 is also displaced in the X1 direction to the position at which the amplitude is maximized. That is, when the manipulation unit 10 is placed at the position at which the amplitude is maximized in the X1 direction, the vibrator in the vibration generation device 30 is also placed at the position at which the amplitude is maximized in the X1 direction.

When a match is made in the X2 direction between the direction in which the excitation force (i) is exerted on the manipulation unit 10 and the direction in which the acceleration (ii) of the manipulation unit 10 that is vibrating due to its inertial force is exerted, or preferably when the time at which the excitation force (i) exerted on the manipulation unit 10 takes the peak value Pd4 in the X2 direction temporarily matches the time at which the acceleration (ii) of the manipulation unit 10 takes the peak value P4 in the X2 direction as illustrated in Fig. 4, large vibration energy can be transmitted from the vibration generation device 30 to the manipulation unit 10 and the peak value Pmax of the amplitude of the acceleration (ii) of the manipulation unit 10 can thereby be temporarily increased. Therefore, it is possible to vibrate the manipulation unit 10 having a relatively large mass in the X1-X2 direction with a large amplitude and thereby to effectively give a manipulation feeling to the finger with which a manipulation is being made.

In the example of driving control in Fig. 4, when the acceleration (ii) of the manipulation unit 10 in the X1-X2 direction takes the fourth peak value P4, the direction in which the excitation force (i) is exerted matches the direction in which the acceleration (ii) is exerted. The transient vibration period is in progress for a while from when the manipulation unit 10 starts to vibrate until a time around time (t) is reached. During this period, even when the direction in which the excitation force (i) is exerted matches the direction in which the acceleration (ii) of the manipulation unit 10 is exerted, it is difficult to increase the acceleration (ii) of the manipulation unit 10. For example, even when a match is made in the X1 direction in the vicinity of the first peak value P1 of the acceleration (ii) of the manipulation unit 10 between the direction in which the excitation force (i) is exerted on the manipulation unit 10 and the direction in which the acceleration (ii) of the manipulation unit 10 is exerted, the effect of increasing the acceleration (ii) of the manipulation unit 10 is lowered. Therefore, it is preferable for the time at which the direction in which the excitation force (i) is exerted matches the direction in which the acceleration (ii) of the manipulation unit 10 is exerted to arrive in the latter half of the transient vibration period or after the start of the steady vibration period following the transient vibration period. For example, it is preferable for the direction in which the excitation force (i) is exerted on the manipulation unit 10 to temporarily match the direction of the acceleration (ii) of the manipulation unit 10 after the acceleration (ii) of the manipulation unit 10 in the X1-X2 direction takes the third peak value P3 or, as illustrated in Fig. 4, takes the fourth peak value P4.

However, to have the manipulator feel a manipulation feeling on the finger immediately after a manipulation command starts, it is preferable to prevent the length of time from when vibration starts until the direction in which the excitation force (i) exerted on the manipulation unit 10 matches the direction in which the acceleration (ii) of the manipulation unit 10 is exerted from becoming too long. For that purpose, it is preferable for the direction in which the excitation force (i) exerted on the manipulation unit 10 to match the direction in which the acceleration (ii) of the manipulation unit 10 is exerted before the acceleration (ii) of the manipulation unit 10 takes the fifth peak value P5 or sixth peak value P6.

From the above, it is preferable for the direction in which the excitation force (i) exerted on the manipulation unit 10 to match the direction in which the acceleration (ii) of the manipulation unit 10 that has started to vibrate is exerted between the time at which the third peak value P3 appears in the acceleration (ii) of the manipulation unit 10 and the time at which the sixth peak value P6 appears.

With the input device 1 illustrated in Fig. 3, the acceleration sensor 15 is provided in the manipulation unit 10. Acceleration caused in the manipulation unit 10 is detected by the acceleration sensor 15. A detection output from the acceleration sensor 15 is given to the control unit 21. In the control unit 21, cycle T1 and a timing at which to switch the frequency of the driving signal to be given to the vibration generation device 30 from cycle T0 to cycle T1 are set, with reference to the detection output from the acceleration sensor 15. As a result, as illustrated in Fig. 4, control is eased under which a match is made immediately after vibration occurs between the time at which the X2-direction excitation force (i) exerted from the vibration generation device 30 on the manipulation unit 10 takes the peak value Pd4 and the time at which the X2-direction acceleration (ii) of the manipulation unit 10 takes the peak value P4.

Temperature of the manipulation unit 10 and its vicinity is detected by the temperature sensor 14 disposed in the manipulation unit 10. A detection output from the temperature sensor 14 is given to the control unit 21. The elastic coefficient (kₘ) of the elastic portion 2k in the elastic support mechanism 2, the viscous resistance coefficient (cₘ) of the viscous resistance portion 2c also in the elastic support mechanism 2, and the vibration characteristics (kₐ and cₐ) of the vibrator in the vibration generation device 30 are likely to be affected by temperature. Efficiency with which vibration is transmitted from the vibration generation device 30 to the manipulation unit 10 is also likely to be affected by temperature. In view of this, in the control unit 21, it is preferable to correct modulation of the frequency of the driving signal to be given to the vibration generation device 30 and a timing at which to switch the cycle from T0 to T1, with reference the detection output from the temperature sensor 14.

In the present invention, the cycle of the excitation force (i) exerted from the vibration generation device 30 on the manipulation unit 10 and modulation of the cycle (modulation of the driving voltage) may have been set in advance by the control unit 21 so that their settings are close to fixed values, according to the vibration characteristics of the manipulation unit 10, without providing the acceleration sensor 15. In this case as well, it is preferable to correct the modulation setting of the cycle of the excitation force (i), according to changes in temperature, in response to a detection signal from the temperature sensor 14.

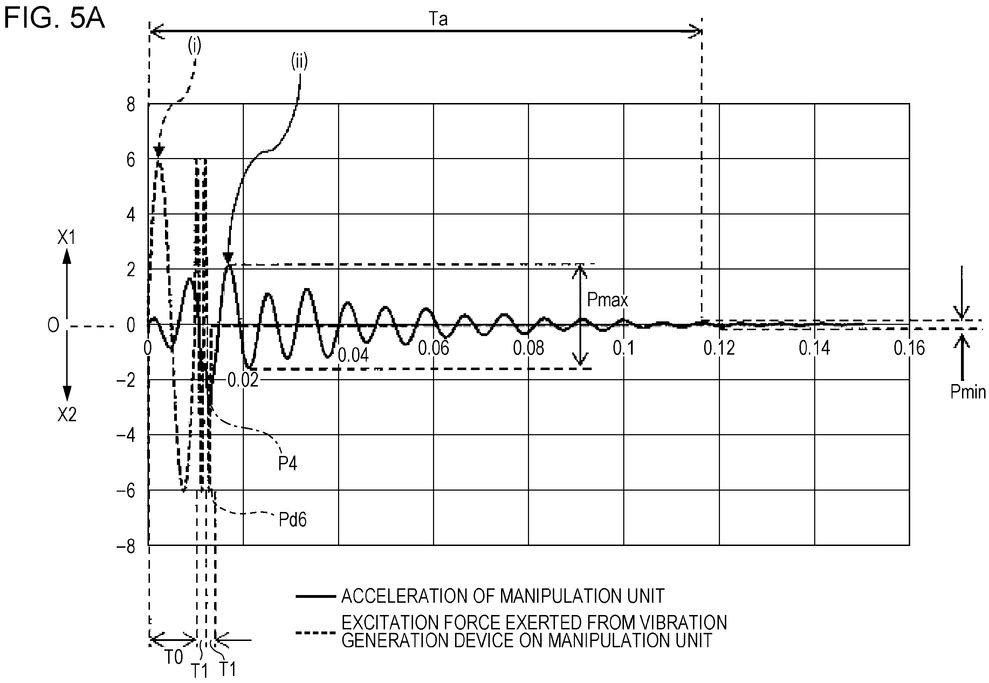

Fig. 5A illustrates another example of driving control in the input device 1 in the embodiment of the present invention. In the example of driving control in Fig. 5A, the excitation force (i) exerted on the manipulation unit 10 is driven so that changes in the excitation force (i) take a total of three cycles composed of a first one cycle, which is a long cycle T0, and two subsequent cycles, each of which is a short cycle T1. In addition, the time at which the X2-direction excitation force (i) exerted on the manipulation unit 10 takes the sixth peak value Pd6 matches the time at which the X2-direction acceleration (ii) of the manipulation unit 10 takes the fourth peak value P4. This increases the peak value Pmax of the amplitude of the acceleration (ii) of the manipulation unit 10.

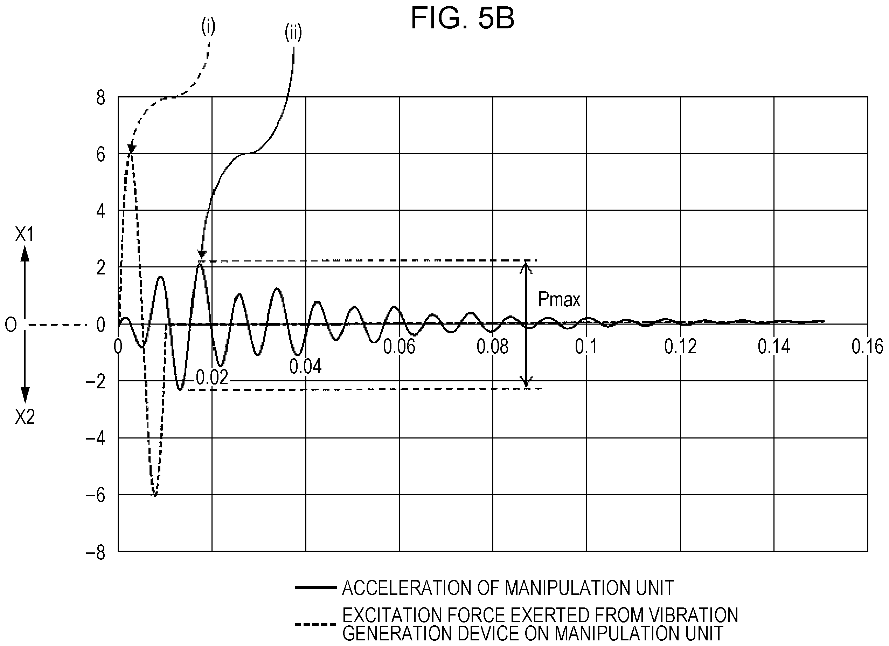

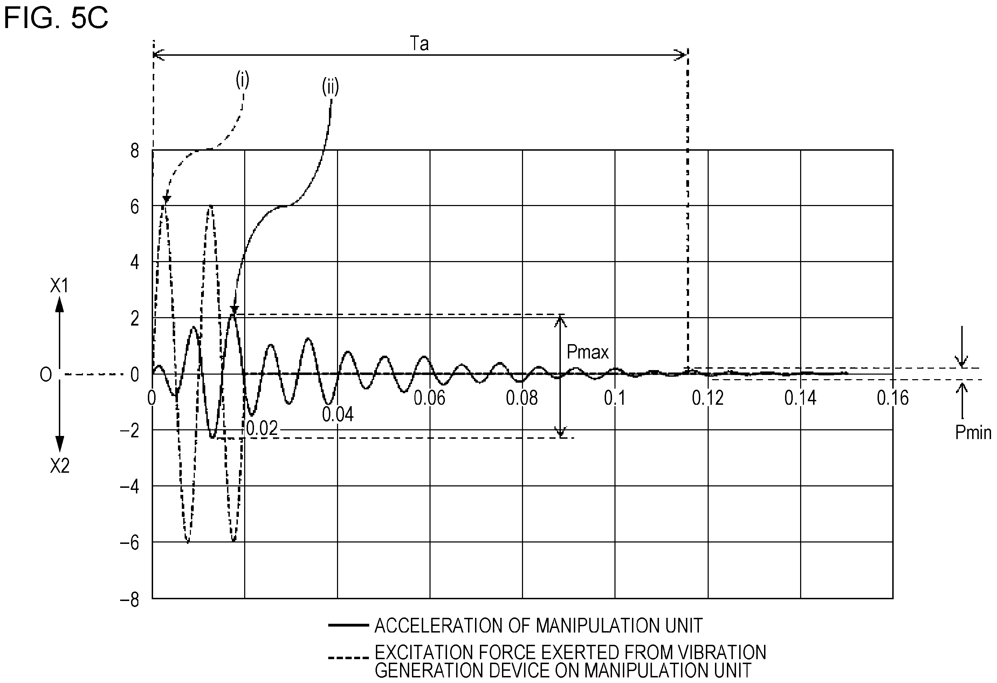

Figs. 5B and 5C each illustrate a comparative example of control in the input device 1. In the comparative example in Fig. 5B, the vibration generation device 30 is driven only in one constant cycle. In this driving control, a match cannot be made in the latter half of the transient vibration period or after an early time in the steady vibration period between the direction of the excitation force (i) exerted on the manipulation unit 10 and the direction in which the acceleration (ii) of the manipulation unit 10 is exerted. Therefore, it is difficult to increase the peak value Pmax of the acceleration (ii) of the manipulation unit 10.

In the comparative example in Fig. 5C, the vibration generation device 30 is driven in two constant cycles. Therefore, the peak value Pmax of the acceleration (ii) of the manipulation unit 10 can be made larger than in the comparative example in Fig. 5B. However, when the reduced width Pmin of the acceleration (ii) after the elapse of time Ta from the start of vibration is compared between the embodiment in Fig. 5A and the comparative example in Fig. 5C, the reduced width Pmin in the comparative example in Fig. 5C is larger than in the embodiment in Fig. 5A. That is, in the comparative example in Fig. 5C, a setup time until the acceleration (ii) of the manipulation unit 10 becomes large is long and the reduction ratio in steady vibration is small, so it is difficult to give a sharp felling to the finger with which a manipulation unit is performed.

## Claims

1. An input device including a manipulation unit (10) having an input detection unit (13), the manipulation unit (10) configured for being manipulated with a finger, a support device (20), an elastic support mechanism (2) configured to link the manipulation unit (10) and the support device (20) together, and a vibration generation device (30) configured to vibrate the manipulation unit (10) to give a manipulation feeling to the finger with which the manipulation unit (10) is being manipulated, the input device comprising a control unit (21) configured to set a cycle of a driving signal to be given to the vibration generation device (30),
the input device being configured such that in the control unit (21), the cycle of the driving signal is set so that a temporary match is made between a direction in which an acceleration of the manipulation unit (10) is exerted, the manipulation unit (10) having started to vibrate in response to a start of the vibration generation device (30), and a direction in which an excitation force is exerted from the vibration generation device (30) on the manipulation unit (10),
**characterised in that**
the control unit (21) is configured to switch the cycle of the driving signal to make a second cycle (T1) of the vibration generated in the vibration generation device (30) shorter than a first cycle (T0) of the vibration generated in the vibration generation device (30) such that at a point in time when the excitation force takes a peak value a match is made between the direction in which the acceleration of the manipulation unit (10) is exerted and the direction in which the excitation force is exerted on the manipulation unit (10), wherein the match is made during an interval between a time at which the acceleration of the manipulation unit (10) takes a third peak value and a time at which the acceleration of the manipulation unit (10) takes a sixth peak value.

2. The input device according Claim 1, wherein:
an acceleration sensor (15) is provided in the manipulation unit (10); and
in the control unit (21), the cycle of the driving signal is set with reference to a detection output from the acceleration sensor (15).

3. The input device according to Claim 1, wherein in the control unit (21), the cycle of the driving signal is set according to vibration characteristics of the manipulation unit (10).

4. The input device according to any one of Claims 1 to 3, wherein:
a temperature sensor (14) is provided in the manipulation unit (10); and
in the control unit (21), the cycle of the driving signal is corrected with reference to a detection output from the temperature sensor (14).

## Patentansprüche

1. Eingabevorrichtung, die Folgendes aufweist: eine Betätigungseinheit (10) mit einer Eingabedetektionseinheit (13), wobei die Betätigungseinheit (10) zur Betätigung mit einem Finger ausgebildet ist, eine Halterungseinrichtung (20), einen elastischen Halterungsmechanismus (2), der zur Kopplung der Betätigungseinheit (10) und der Halterungseinrichtung (20) miteinander ausgebildet ist, sowie eine Schwingungserzeugungseinrichtung (30), die dazu ausgebildet ist, die Betätigungseinheit (10) in Schwingung zu versetzen, um dem Finger, mit dem die Betätigungseinheit (10) betätigt wird, ein Betätigungsgefühl zu vermitteln, wobei die Eingabevorrichtung eine Steuereinheit (21) aufweist, die zur Festlegung eines Zyklus eines an die Schwingungserzeugungseinrichtung (30) abzugebenden Ansteuersignals ausgebildet ist,
wobei die Eingabevorrichtung derart ausgebildet ist, dass in der Steuereinheit (21) der Zyklus des Ansteuersignals derart festgelegt wird, dass eine temporäre Übereinstimmung hergestellt wird zwischen einer Richtung, in der eine Beschleunigung der Betätigungseinheit (10) ausgeübt wird, wobei die Betätigungseinheit (10) in Reaktion auf den Start der Schwingungserzeugungseinrichtung (30) zu schwingen begonnen hat, und einer Richtung, in der eine Anregungskraft von der Schwingungserzeugungseinrichtung (30) auf die Betätigungseinheit (10) ausgeübt wird,
**dadurch gekennzeichnet,**
**dass** die Steuereinheit (21) dazu ausgebildet ist, den Zyklus des Ansteuersignals derart zu schalten, dass ein zweiter Zyklus (T1) der in der Schwingungserzeugungseinrichtung (30) erzeugten Schwingung kürzer wird als ein erster Zyklus (T0) der in der Schwingungserzeugungseinrichtung (30) erzeugten Schwingung, so dass zu einem Zeitpunkt, zu dem die Anregungskraft einen Spitzenwert annimmt, eine Übereinstimmung hergestellt wird zwischen der Richtung, in dem die Beschleunigung der Betätigungseinheit (10) ausgeübt wird, und der Richtung, in der die Anregungskraft auf die Betätigungseinheit (10) ausgeübt wird, wobei die Übereinstimmung während eines Intervalls zwischen einem Zeitpunkt, zu dem die Beschleunigung der Betätigungseinheit (10) einen dritten Spitzenwert annimmt, und einem Zeitpunkt hergestellt wird, zu dem Beschleunigung der Betätigungseinheit (10) einen sechsten Spitzenwert annimmt.

2. Eingabevorrichtung nach Anspruch 1,
wobei ein Beschleunigungssensor (15) in der Betätigungseinheit (10) vorgesehen; und
wobei in der Steuereinheit (21) der Zyklus des Ansteuersignals in Bezug auf ein Detektionsausgangssignal von dem Beschleunigungssensor (15) festgelegt wird.

3. Eingabevorrichtung nach Anspruch 1,
wobei in der Steuereinheit (21) der Zyklus des Ansteuersignals in Abhängigkeit von Schwingungseigenschaften der Betätigungseinheit (10) festgelegt wird.

4. Eingabevorrichtung nach einem der Ansprüche 1 bis 3,
wobei ein Temperatursensor (14) in der Betätigungseinheit (10) vorgesehen ist; und
wobei in der Steuereinheit (21) der Zyklus des Ansteuersignals unter Bezugnahme auf ein Detektionsausgangssignal von dem Temperatursensor (14) korrigiert wird.

## Revendications

1. Dispositif d'entrée comprenant une unité de manipulation (10) ayant une unité de détection d'entrée (13), l'unité de manipulation (10) étant configurée pour être manipulée avec un doigt, un dispositif de support (20), un mécanisme de support élastique (2) configuré pour relier l'unité de manipulation (10) et le dispositif de support (20) entre eux, et un dispositif de génération de vibrations (30) configuré pour faire vibrer l'unité de manipulation (10) afin de donner une sensation de manipulation au doigt avec lequel l'unité de manipulation (10) est manipulée, le dispositif d'entrée comprenant une unité de commande (21) configurée pour définir un cycle d'un signal d'entraînement à fournir au dispositif de génération de vibrations (30),
le dispositif d'entrée étant configuré de telle sorte que, dans l'unité de commande (21), le cycle du signal d'entraînement soit défini de manière à établir une concordance temporaire entre une direction dans laquelle une accélération de l'unité de manipulation (10) est exercée, l'unité de manipulation (10) ayant commencé à vibrer en réponse au démarrage du dispositif de génération de vibrations (30), et une direction dans laquelle une force d'excitation est exercée par le dispositif de génération de vibrations (30) sur l'unité de manipulation (10),
**caractérisé en ce que**
l'unité de commande (21) est configurée pour commuter le cycle du signal d'entraînement afin de rendre un second cycle (T1) de la vibration générée dans le dispositif de génération de vibrations (30) plus court qu'un premier cycle (T0) de la vibration générée dans le dispositif de génération de vibrations (30) de telle sorte qu'au moment où la force d'excitation prend une valeur de crête, une concordance soit établie entre la direction dans laquelle l'accélération de l'unité de manipulation (10) est exercée et la direction dans laquelle la force d'excitation est exercée sur l'unité de manipulation (10), la concordance étant établie pendant un intervalle compris entre un instant auquel l'accélération de l'unité de manipulation (10) prend une troisième valeur de crête et un instant auquel l'accélération de l'unité de manipulation (10) prend une sixième valeur de crête.

2. Dispositif d'entrée selon la revendication 1, dans lequel :
un capteur d'accélération (15) est prévu dans l'unité de manipulation (10) ; et
dans l'unité de commande (21), le cycle du signal d'entraînement est défini en référence à une sortie de détection provenant du capteur d'accélération (15).

3. Dispositif d'entrée selon la revendication 1, dans lequel, dans l'unité de commande (21), le cycle du signal d'entraînement est défini en fonction des caractéristiques de vibration de l'unité de manipulation (10).

4. Dispositif d'entrée selon l'une quelconque des revendications 1 à 3, dans lequel :
un capteur de température (14) est prévu dans l'unité de manipulation (10) ; et
dans l'unité de commande (21), le cycle du signal d'entraînement est corrigé en référence à une sortie de détection provenant du capteur de température (14).
